# EUROPEAN PATENT SPECIFICATION

(11) **EP 3 247 133 B1**
(45) Date of publication and mention of the grant of the patent: **15.09.2021**
(21) Application number: 15887275.4
(22) Date of filing: 16.11.2015
(51) Int. Cl.: G01S 15/88, G01S 7/521, H04R 17/00, G06F 3/043, G06F 3/01, G10K 9/22

(54) **COMPOSITE STRUCTURE OF PIEZOELECTRIC RECEIVER AND ULTRASONIC WAVE GENERATOR**
VERBUNDSTRUKTUR AUS PIEZOELEKTRISCHEM EMPFÄNGER UND ULTRASCHALLWELLENGENERATOR
STRUCTURE COMPOSITE DE RÉCEPTEUR PIÉZO-ÉLECTRIQUE ET DE GÉNÉRATEUR D'ONDES ULTRASONORES

(30) Priority: 31.03.2015 CN 201510149037
(43) Date of publication of application: 22.11.2017
(73) Proprietor: Goertek Inc., Hi-Tech Industry District Weifang, Shandong 261031 (CN)
(72) Inventor: PING, Kang, Weifang Shandong 261031 (CN); YANG, Xinfeng, Weifang Shandong 261031 (CN)
(74) Representative: Cabinet Bleger-Rhein-Poupon
(86) International application number: PCT/CN2015/094734
(87) International publication number: WO 2016/155321

(56) References cited:
- EP-A1- 2 799 953
- EP-A1- 2 852 057
- WO-A1-2012/123787
- CN-A- 101 008 878
- CN-A- 102 314 217
- CN-A- 104 703 104
- CN-U- 204 518 072
- JP-A- 2000 032 107
- JP-A- 2006 121 648
- US-A- 4 454 386
- US-A1- 2002 135 708
- US-A1- 2015 029 085
- None

## Description

### TECHNICAL FIELD

The present invention relates to the technical field of electronics, and more particularly, to a combined structure of a piezoelectric receiver and an ultrasonic generator.

### BACKGROUND

In the era of mobile internet, people are paying more and more attention on consumer electronic information products, and a large number of smart devices are brought in people's daily life. In human-computer interaction, application of gesture recognition enables operation and control of large-screen smart devices to be more convenient. With the development of science and deepening of research on basic materials, the number of sensors for the gesture recognition on a smart device is also increasing. A technology in which an ultrasonic echo positioning principle of piezoelectric ceramics is adopted to recognize a suspension gesture is also gradually developing. However, a traditional acoustic device on a mobile phone is relatively poor in ultrasonic frequency band performance and cannot meet the requirements of an ultrasonic sensor. Therefore, in order to realize this function, an ultrasonic signal generator, an ultrasonic transducer and an ultrasonic receiving sensor should be at least additionally arranged, resulting in too many components. Undoubtedly, a space and cost of the mobile phone are increased, and it challenges a thinner and lighter design trend of the mobile phones.

EP 2 852 057 A1 discloses an audio and ultrasound signal processing circuit, comprising an audio input terminal for receiving an input signal comprising an audio input signal; an amplitude detector, configured to determine an amplitude of the input signal and provide an amplitude level signal; a gain calculator configured to determine an ultrasound amplification factor in accordance with the amplitude level signal and a target amplitude signal; a variable ultrasound amplifier configured to receive an ultrasound input signal and modulate an amplitude of the ultrasound input signal in accordance with the ultrasound amplification factor in order to provide an amplified ultrasound signal; and an output terminal for providing an enhanced output signal comprising frequency components that correspond to the audio input signal and frequency components that correspond to the amplified ultrasound signal.

WO 2012/123787 A1 discloses an apparatus comprising an echolocation module configured to determine a distance to the object based on the received sound signal reflected from an object. The echolocation module determines surroundings based on the determined distance. A processor is configured to modify one or more attributes of the apparatus based on the determined surroundings.

JP 2006 121648 A discloses a piezoelectric acoustic element provided with a shim board, and a piezoelectric driving portion formed on one side of the shim board. As for the piezoelectric acoustic element, the piezoelectric driving portion is composed by mutually laminating electrode layers, and a piezoelectric layer, the shim board is composed of a ceramic material, and the piezoelectric drive portion and the shim board are calcined to be integrated.

US 2002/135708 A1 discloses a display substrate comprising a plate, for example a glass plate, on which display elements, e.g. pixels comprising pixel electrodes and thin-film-transistors, and an acoustic transducer, e.g. a microphone, speaker or buzzer, formed from thin film layers over a cavity, are formed. The cavity may be provided by powderblasting through the depth of the glass plate. The display substrate with integrated acoustic transducer may be incorporated in a display device, e.g. a liquid crystal display device. Also described is a discrete acoustic transducer, comprising a plate of an insulating material, a cavity in the plate, a plurality of layers that have been deposited on the plate, and a moveable member formed from the deposited layers and positioned over the cavity.

US 4 454 386 A discloses a piezoelectric transducer for use in a piezoelectric loud speaker including a metallic plate and a piezoelectric wafer fixed to at least one face of the metallic plate, a first end of the piezoelectric transducer being adapted to be clamped to the frame of the loud speaker and a second end being adapted to be connected to a cone diaphragm in the loud speaker, the ratio of the width of the transducer at its first end· being less than its maximum width, and the ratio of as maximum width to its effective length being between 0.75 and 3.

EP 2 799 953 A1 discloses a terminal control method and apparatus, and a terminal. The method includes: obtaining position distribution of a terminal held position on the terminal; and performing, according to a mapping relationship between position distribution and a terminal control operation, an operation corresponding to the position distribution, so as to control the terminal. The apparatus includes: a first obtaining module and a performing module. The terminal includes the apparatus according to an embodiment of the present invention. In the terminal control method and apparatus, and the terminal according to embodiments of the present invention, terminal information of a terminal is obtained, and therefore, intention of a user about controlling the terminal can be determined proactively, and a corresponding operation may be performed according to position distribution, thereby improving intelligence and automation levels of controlling a terminal, and improving user experience.

JP 2000 032107 discloses a receiver comprising plural sound emitting holes provided on the top surface of an upper case. Also, a 1st step part which adheres and supports a piezoelectric diaphragm and a 2nd step part formed by erecting a part of a bottom part coming into contact with a side wall inside a case are provided on the inner peripheral plane of the side wall of a lower case and also, a slit-shaped leak hole is formed on a part of a wall part of the erected 2nd step part. About the diaphragm, piezoelectric ceramic is fixed to a metal substrate surface with an adhesive. Because the hole is formed on the side wall in a slit shape in this way, it is protected by a gap formed by the bottom part of the case 1b and the bottom part of the part and even if the bottom part of the part is directly mounted on a printed board, the hole is not closed.

### SUMMARY

An object of the present invention is to provide a combined structure of a piezoelectric receiver and an ultrasonic generator. The adopted technical solutions are as follows.

The invention relates to a combined structure of a piezoelectric receiver and an ultrasonic generator comprises a piezoelectric plate of the piezoelectric receiver, the piezoelectric plate being configured to vibrate for transmitting the vibration to a panel of a mobile phone, so as to successively make a sound; an ultrasonic signal generator configured to generate an electrical signal of the ultrasonic frequency band to realize gesture positioning; an audio signal input circuit; and a switching circuit, the input end of the switching circuit being connected with the ultrasonic signal generator and the audio signal input circuit, respectively, so as to switch therebetween, and the output end of the switching circuit being connected with the piezoelectric plate. More particularly, the invention includes a mode recognition circuit for controlling the switching circuit, the mode recognition circuit recognizing an ultrasonic mode in which the switching circuit is switched into the ultrasonic signal generator and other modes in which the switching circuit is switched to the audio signal input circuit, and the invention is furthermore such that in the ultrasonic mode an ultrasonic electric signal output by the ultrasonic signal generator is input into the piezoelectric plate via a power amplifying circuit.

Optionally, the combined structure further comprises an ultrasonic receiving sensor.

Optionally, the combined structure further comprises a shell; a boss is arranged at the inner side of the shell; and one end of the piezoelectric plate is adhered to the boss.

Optionally, the combined structure further comprises a counterweight adhered to the other end of the piezoelectric plate.

Optionally, the counterweight is adhered to the side, close to the shell, of the piezoelectric plate.

Optionally, the combined structure further comprises a shell on which a sensor groove is formed; the ultrasonic receiving sensor is arranged in the sensor groove; and a receiving side of the ultrasonic receiving sensor faces the outer side of the shell.

Optionally, an ultrasonic sounding channel is formed on the shell.

Optionally, there are two ultrasonic receiving sensors between which the ultrasonic sounding channel is located.

Optionally, the ultrasonic sounding channel is provided with sounding holes.

The inventor of the present invention found that, a structure that combines the piezoelectric receiver with the ultrasonic generator is not yet provided by the prior art, so the present invention relates to a new technical solution.

The technical effect of the present invention is that the piezoelectric receiver and the ultrasonic generator are combined, such that the functions of the receiver and the ultrasonic generator can be achieved only through one piezoelectric plate, saving the cost and the space of electronic equipment.

Further features of the present invention and advantages thereof will become apparent from the following detailed description of exemplary embodiments according to the present invention with reference to the attached drawings.

### BRIEF DESCRIPTION OF THE DRAWINGS

The accompanying drawings, which are incorporated in and constitute a part of the specification, illustrate embodiments of the invention and, together with the description thereof, serve to explain the principles of the invention.
Fig. 1 shows a circuit block diagram of a combined structure of a piezoelectric receiver and an ultrasonic generator according to an embodiment of the present invention.
Fig. 2 is an exploded schematic view of the combined structure of the piezoelectric receiver and the ultrasonic generator according to the embodiment of the present invention.
Figs. 3-5 show schematically structural back, front and side views of the combined structure of the piezoelectric receiver and the ultrasonic generator according to the embodiment of the present invention, respectively.
Figs. 6-8 show a perspective view, a top view and a side view of a honeycombed structure, respectively.
Fig. 9 is a schematic view showing a principle when the combined structure of the piezoelectric receiver and the ultrasonic generator, provided by an embodiment of the present invention, is adopted to perform gesture recognition.

Description of reference numerals: 1, mode recognition circuit; 2, switching circuit; 3, audio signal input circuit; 4, ultrasonic signal generator; 5, power amplifying circuit; 6, piezoelectric plate; 7, ultrasonic receiving sensor; 8, ultrasonic processor; 11, double-sided adhesive tape; 12, double-sided adhesive tape; 13, flexible counterweight; 14, sensor groove; 15, boss; 16, ultrasonic sounding channel; 17, honeycombed structure; and 171, sounding hole.

### DETAILED DESCRIPTION

Various exemplary embodiments of the present invention will now be described in detail with reference to the drawings. It should be noted that the relative arrangement of the components and steps, the numerical expressions, and numerical values set forth in these embodiments do not limit the scope of the present invention unless it is specifically stated otherwise.

The following description of at least one exemplary embodiment is merely illustrative in nature and is in no way intended to limit the invention, its application, or uses.

Techniques, methods and apparatus as known by one of ordinary skill in the relevant art may not be discussed in detail but are intended to be part of the specification where appropriate.

In all of the examples illustrated and discussed herein, any specific values should be interpreted to be illustrative only and non-limiting. Thus, other examples of the exemplary embodiments could have different values.

Notice that similar reference numerals and letters refer to similar items in the following figures, and thus once an item is defined in one figure, it is possible that it need not be further discussed in the accompanying drawings.

A receiver, also called as a handset, is an electro-acoustic device that converts an audio electronic signal into a sound signal under a condition without sound leakage. The receiver is widely applied to communication terminal equipment such as a mobile phone, a fixed telephone, a hearing aid and the like to play an audio (including call voice, music, etc.). A circuit connection manner of a conventional piezoelectric receiver is illustrated by taking a mobile phone as an example. An audio signal (including call voice, music, etc.) input circuit is connected to a piezoelectric plate via a power amplifying circuit; the piezoelectric plate vibrates through a converse piezoelectric effect; and the vibration is transmitted to a panel of the mobile phone via a coupling structure connected with the panel, so as to successively make a sound. Here, the whole panel vibrates to make the sound, so that there is no need to form a sounding hole.

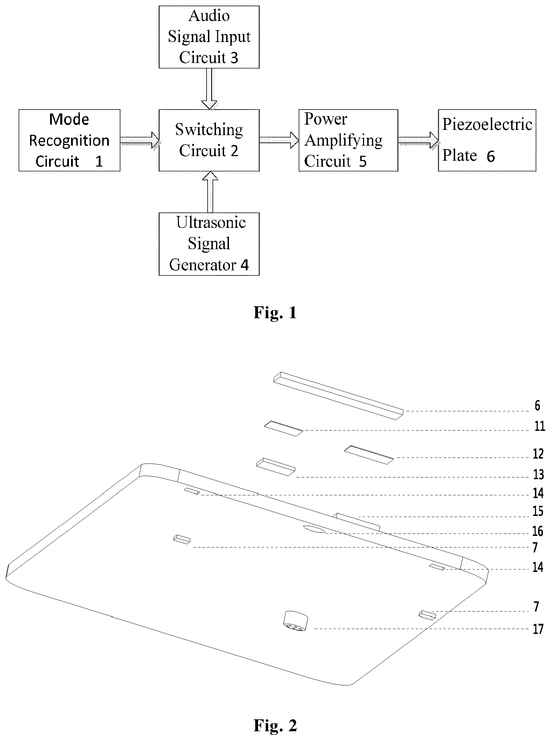

The piezoelectric plate can work well at a frequency band of 20 Hz-20 kHz (which is in an audible scope of a human ear) and at an ultrasonic frequency band above 20 kHz due to its excellent ultrasonic performance. Therefore, in the present invention, the receiver and the ultrasonic generator are combined by taking the piezoelectric receiver as a basis and adopting the excellent ultrasonic performance of the piezoelectric plate, and dual functions of audio playing and gesture recognition are realized based on different working frequency bands of the piezoelectric plate. A circuit connection may refer to Fig.1. A mode recognition circuit 1 is configured to recognize an ultrasonic mode and other modes (for example, a call mode, a music playing mode, and the like); in the mobile phone, a mobile phone processor serves as the mode recognition circuit 1 which controls a switching circuit 2 to switch between an audio signal input circuit 3 and an ultrasonic signal generator 4; and the ultrasonic signal generator 4 is configured to generate an electrical signal of the ultrasonic frequency band. Under the ultrasonic mode, the switching circuit 2 is switched into the ultrasonic signal generator 4; an ultrasonic electric signal output by the ultrasonic signal generator 4 is input into the piezoelectric plate 6 via a power amplifying circuit 5; and the piezoelectric plate 6 generates a vibration due to the converse piezoelectric effect to make an ultrasonic wave. Under other modes, the switching circuit 2 is switched to the audio signal input circuit 3. Further, the combined structure further comprises ultrasonic receiving sensors configured to receive ultrasonic echoes, and an ultrasonic processor configured to calculate to realize gesture positioning.

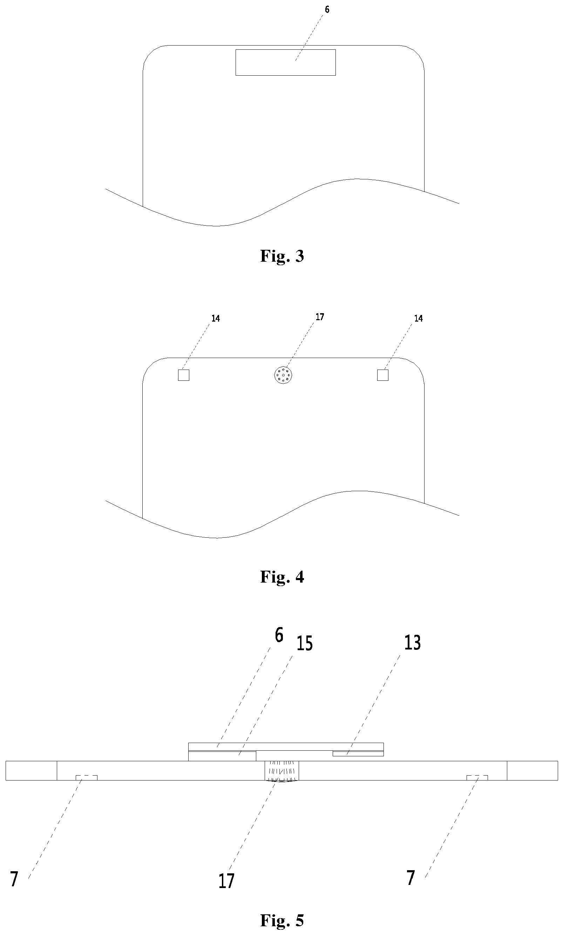

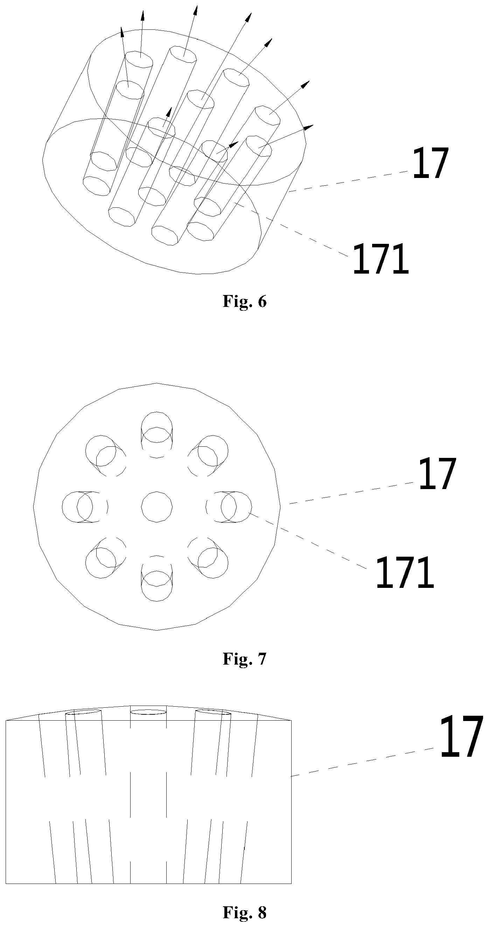

Specific arrangement manners of the combined structure of the piezoelectric receiver and the ultrasonic generator, provided by the present invention, are described with reference to Figs. 2-5. A shell of electronic equipment is composed of panels. A boss 15 is arranged at a position, close to the edge, on a back surface of one of the panels; one end of the piezoelectric plate 6 is adhered to the boss 15 via a double-sided adhesive tape 12; and a flexible counterweight 13 is adhered to the other end of the piezoelectric plate 6 through a double-sided adhesive tape 11 and faces this panel. Through the flexible counterweight 13, vibration performance and resonant frequency of the piezoelectric plate 6 may be adjusted, wherein the back surface of the panel refers to the surface, facing the inside of the electronic equipment, of the panel. Two sensor grooves 14 are formed on the front surface of the panel, and are located at the two ends of the piezoelectric plate 6, respectively. Two ultrasonic receiving sensors 7 configured to receive the ultrasonic echoes are arranged in the sensor grooves 14, respectively; and the receiving ends of the ultrasonic receiving sensors 7 face the outer side of the shell. An ultrasonic sounding channel 16 is formed in this panel and located in the middle of the two sensor grooves 14, and a honeycombed structure 17 is arranged in the sounding channel. A specific structure of the honeycombed structure 17 can refer to Figs. 6-8. It can be seen that sounding holes 171 are radially distributed to facilitate ultrasonic scattering.

The size of the ultrasonic sounding channel 16, the number, the shape and the arrangement manner of the sounding holes, and the positions, the number and the arrangement manner of the ultrasonic receiving sensors 7 can be further optimized according to an actual application environment.

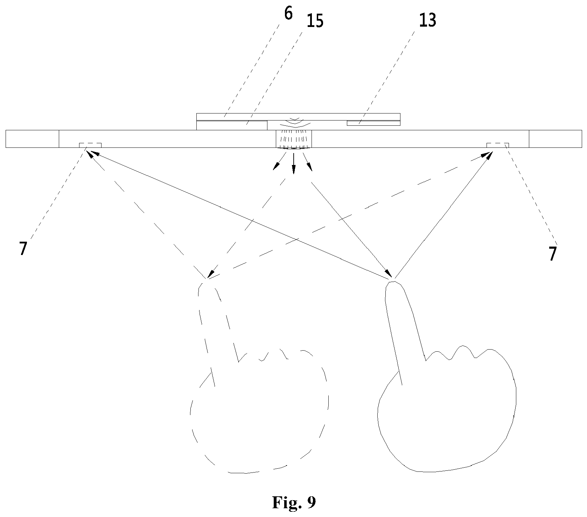

The principle of gesture recognition provided by an embodiment of the present invention is described with reference to Fig. 9. Under an ultrasonic gesture recognition mode, a finger moves; the piezoelectric plate 6 vibrates to make an ultrasonic; the ultrasonic receiving sensors 7 receive echoes; and the ultrasonic processor 8 calculates a reflection time difference to calculate a position of the finger, so that the gesture recognition is realized.

The technical effects of the combined structure of the piezoelectric receiver and the ultrasonic generator, provided by an embodiment of the present invention are as follows.
1. When working at the frequency band of 20Hz-20kHz, the combined structure may be used as a receiver.
2. When working at the frequency band above 20kHz, the combined structure may be used as an ultrasonic generator.
3. The receiver and the ultrasonic generator are combined, so that the mobile phone space and cost are saved.
4. Through the combined structure of the piezoelectric receiver and the ultrasonic generator, provided by an embodiment of the present invention, a gesture recognition function can be realized.

Although some specific embodiments of the present invention have been demonstrated in detail with examples, it should be understood by a person skilled in the art that the above examples are only intended to be illustrative but not to limit the scope of the present invention. The scope of the present invention is defined by the appended claims.

## Claims

1. A combined structure of a piezoelectric receiver and an ultrasonic generator, comprising: a piezoelectric plate (6) of the piezoelectric receiver, the piezoelectric plate (6) being configured to vibrate for transmitting the vibration to a panel of a mobile phone, so as to successively make a sound; an ultrasonic signal generator (4) configured to generate an electrical signal of the ultrasonic frequency band to realize gesture positioning; an audio signal input circuit (3); and a switching circuit (2), the input end of the switching circuit (2) being connected with the ultrasonic signal generator (4) and the audio signal input circuit (3), respectively, so as to switch therebetween, and the output end of the switching circuit (2) being connected with the piezoelectric plate (6), **characterized by** a mode recognition circuit (1) for controlling the switching circuit (2), the mode recognition circuit (1) recognizing an ultrasonic mode in which the switching circuit (2) is switched into the ultrasonic signal generator (4) and other modes in which the switching circuit (2) is switched to the audio signal input circuit (3), and further **characterized in that** in the ultrasonic mode an ultrasonic electric signal output by the ultrasonic signal generator (4) is input into the piezoelectric plate (6) via a power amplifying circuit (5).

2. The structure of claim 1, **characterized by** an ultrasonic receiving sensor (7).

3. The structure of claim 2, **characterized by** a shell, wherein a boss (15) is arranged at the inner side of the shell, and one end of the piezoelectric plate (6) is adhered to the boss (15).

4. The structure of claim 3, **characterized by** a counterweight (13) adhered to the other end of the piezoelectric plate (6).

5. The structure of claim 4, **characterized in that** the counterweight (13) is adhered to the side, close to the shell, of the piezoelectric plate (6).

6. The structure of claim 2, **characterized by** a shell on which a sensor groove (14) is formed, wherein the ultrasonic receiving sensor (7) is arranged in the sensor groove (14), and a receiving side of the ultrasonic receiving sensor (7) faces the outer side of the shell.

7. The structure of claim 6, **characterized in that** an ultrasonic sounding channel (16) is formed on the shell.

8. The structure of claim 7, **characterized in that** there are two ultrasonic receiving sensors (7) between which the ultrasonic sounding channel (16) is located.

9. The structure of claim 7, **characterized in that** the ultrasonic sounding channel is provided with sounding holes (171).

## Patentansprüche

1. Kombinierte Struktur eines piezoelektrischen Empfängers und eines Ultraschallgenerators, umfassend: eine piezoelektrische Platte (6) des piezoelektrischen Empfängers, wobei die piezoelektrische Platte (6) so konfiguriert ist, dass sie vibriert, um die Vibration auf ein Bedienfeld eines Mobiltelefons zu übertragen, um nacheinander einen Schall zu machen; einen Ultraschallsignalgenerator (4), der konfiguriert ist, um ein elektrisches Signal des Ultraschallfrequenzbandes zu erzeugen, um eine Gestenpositionierung zu realisieren; eine Audiosignaleingangsschaltung (3); und eine Schaltschaltung (2), wobei das Eingangsende der Schaltschaltung (2) jeweils mit dem Ultraschallsignalgenerator (4) bzw. der Audiosignaleingangsschaltung (3) verbunden ist, um dazwischen umzuschalten, und das Ausgangsende der Schaltschaltung (2) mit der piezoelektrischen Platte (6) verbunden ist, **gekennzeichnet durch** eine Moduserkennungsschaltung (1) zum Steuern der Schaltschaltung (2), wobei die Moduserkennungsschaltung (1) einen Ultraschallmodus, in dem die Schaltschaltung (2) in den Ultraschallsignalgenerator (4) geschaltet wird, und andere Modi, in denen die Schaltschaltung (2) auf die Audiosignaleingangsschaltung (3) geschaltet wird, erkennt, und weiter **dadurch gekennzeichnet, dass** im Ultraschallmodus ein elektrisches Ultraschallsignal, das von dem Ultraschallsignalgenerator (4) ausgegeben wird, in die piezoelektrische Platte (6) über eine Leistungsverstärkerschaltung (5) eingegeben wird.

2. Struktur nach Anspruch 1, **gekennzeichnet durch** einen Ultraschallempfangssensor (7).

3. Struktur nach Anspruch 2, **gekennzeichnet durch** eine Schale, wobei ein Vorsprung (15) an der Innenseite der Schale angeordnet ist, und ein Ende der piezoelektrischen Platte (6) an den Vorsprung (15) geklebt ist.

4. Struktur nach Anspruch 3, **gekennzeichnet durch** ein Gegengewicht (13), das am anderen Ende der piezoelektrischen Platte (6) haftet.

5. Struktur nach Anspruch 4, **dadurch gekennzeichnet, dass** das Gegengewicht (13) an der schalennahen Seite der piezoelektrischen Platte (6) angeklebt ist.

6. Struktur nach Anspruch 2, **gekennzeichnet durch** eine Schale, an der eine Sensornut (14) ausgebildet ist, wobei der Ultraschallempfangssensor (7) in der Sensornut (14) angeordnet ist, und eine Empfangsseite des Ultraschallempfangssensors (7 ) zur Außenseite der Schale zeigt.

7. Struktur nach Anspruch 6, **dadurch gekennzeichnet, dass** an der Schale ein Ultraschallschallkanal (16) ausgebildet ist.

8. Struktur nach Anspruch 7, **dadurch gekennzeichnet, dass** zwei Ultraschallempfangssensoren (7) vorhanden sind, zwischen denen sich der Ultraschallschallkanal (16) befindet.

9. Struktur nach Anspruch 7, **dadurch gekennzeichnet, dass** der Ultraschallschallkanal mit Schalllöchern (171) versehen ist.

## Revendications

1. Structure composite d'un récepteur piézoélectrique et d'un générateur d'ultrasons, comprenant : une feuille piézoélectrique (6) dudit récepteur piézoélectrique, ladite feuille piézoélectrique (6) est configurée pour vibrer afin de transmettre la vibration à un panneau de téléphone mobile, puis émettre un son ; un générateur de signaux ultrasonores (4), configuré pour émettre des signaux électriques dans la bande de fréquences ultrasonores afin de réaliser un positionnement gestuel ; un circuit d'entrée de signal audio (3) ; et un circuit de commutation (2), les bornes d'entrée dudit circuit de commutation (2) sont respectivement connectés avec ledit générateur de signaux ultrasonores (4) et ledit circuit d'entrée de signal audio (3) pour basculer entre les deux, et les bornes de sortie dudit circuit de commutation (2) est connectée à ladite feuille piézoélectrique (6), **caractérisée en ce qu'**un circuit de reconnaissances de formes (1) pour commander ledit circuit de commutation (2) est prévu, et ledit circuit de reconnaissances de formes (1) reconnaît la forme ultrasonique et d'autres formes, et à la forme ultrasonore, ledit circuit de commutation (2) est commuté sur ledit générateur de signaux ultrasonores (4), et aux autres formes, ledit circuit de commutation (2) est commuté sur ledit circuit d'entrée de signal audio (3), et également **caractérisée en ce qu'**à la forme ultrasonore, les signaux électriques ultrasonores émis par ledit générateur de signaux ultrasonores (4) sont introduits dans ladite feuille plaque piézoélectrique (6) à travers un circuit amplificateur de puissance (5).

2. Structure selon la revendication 1, **caractérisée en ce qu'**un capteur récepteur à ultrasons (7) est prévu.

3. Structure selon la revendication 2, **caractérisée en ce qu'**un boîtier est prévu, dans lequel un bossage (15) est prévu à l'intérieur dudit boîtier, et une extrémité de ladite feuille piézoélectrique (6) est collée sur ledit bossage (15).

4. Structure selon la revendication 3, **caractérisée en ce qu'**un poids (13) collé à l'autre extrémité de ladite feuille piézoélectrique (6) est prévu.

5. Structure selon la revendication 4, **caractérisée en ce que** ledit poids (13) est collé sur un côté de ladite feuille piézoélectrique (6) proche dudit boîtier.

6. Structure selon la revendication 2, **caractérisée en ce qu'**une rainure de capteur (14) est formée sur ledit boîtier, dans laquelle ledit capteur récepteur à ultrasons (7) est disposé dans ladite rainure de capteur (14), et le côté récepteur dudit capteur récepteur à ultrasons (7) est tourné vers l'extérieur dudit boîtier.

7. Structure selon la revendication 6, **caractérisée en ce qu'**un canal sonore à ultrasons (16) est formé sur ledit boîtier.

8. Structure selon la revendication 7, **caractérisée en ce qu'**il y a deux capteurs récepteurs à ultrasons (7), et ledit canal sonore à ultrasons (16) est situé entre les deux capteurs récepteurs à ultrasons (7).

9. Structure selon la revendication 7, **caractérisée en ce que** ledit canal sonore à ultrasons est pourvu de trous sonores (171).
